# EUROPÄISCHE PATENTSCHRIFT

(11) **EP 0 642 882 B1**
(45) Veröffentlichungstag und Bekanntmachung des Hinweises auf die Patenterteilung: **23.10.1996**
(21) Anmeldenummer: 94109772.7
(22) Anmeldetag: 24.06.1994
(51) Int. Cl.: B23Q 7/14

(54) **Palettenwechsler für Werkzeugmaschinen**
Palette changing apparatus for machine tools
Echangeur de palettes pour machine-outil

(30) Priorität: 11.09.1993 DE 4330915
(43) Veröffentlichungstag der Anmeldung: 15.03.1995
(73) Patentinhaber: BERNHARD STEINEL WERKZEUGMASCHINENFABRIK GmbH u. Co., D-78056 Villingen-Schwenningen (DE)
(72) Erfinder: Buggle, Günther, D-78056 Villingen-Schwenningen (DE); Schütz, Willi, D-72175 Weiden-Dornhan (DE)
(74) Vertreter: Patentanwälte Westphal, Buchner, Mussgnug Neunert, Göhring

(56) Entgegenhaltungen:
- EP-A- 0 000 874
- EP-A- 0 366 791
- EP-B- 0 281 664
- DD-A- 201 987
- DE-A- 3 605 470
- DE-A- 4 236 416
- PATENT ABSTRACTS OF JAPAN vol. 9, no. 290 (M-430) (2013) 16. November 1985 & JP-A-60 131 146 (TOYODA KOKI) 12. Juli 1985

## Beschreibung

Die Erfindung betrifft einen Palettenwechsler für Werkzeugmaschinen gemäß dem Oberbegriff des Anspruchs 1.

Ein Palettenwechsler dieser Gattung ist aus der EP 0 281 664 B1 bekannt. Bei diesem bekannten Palettenwechsler ist auf einem in Y-Richtung verschiebbaren Schlitten eine Palettenaufnahme in X-Richtung verschiebbar gelagert. An der Palettenaufnahme ist eine Schwinge um eine zur X-Y-Ebene senkrechte Achse schwenkbar gelagert. Ein an der Achse der Schwinge angebrachtes Zahnrad greift in eine an dem Schlitten befestigte Zahnstange ein, um die Schwinge zu verschwenken, wenn die Palettenaufnahme in X-Richtung auf dem Schlitten verschoben wird. Die Schwinge greift mit einer an ihrem freien Ende angebrachten Rolle in eine Nut der Palette ein, um die Palette bei der Schwenkbewegung der Schwinge zu verschieben. Zum Palettenwechsel wird die Palettenaufnahme hydraulisch abgehoben, um das Zahnrad der Schwinge axial zu verschieben und mit der Zahnstange in Eingriff zu bringen. Darauf wird die Palettenaufnahme in X-Richtung verschoben, wodurch die Palette entsprechend dem Radiusverhältnis von Schwinge und Zahnrad mit höherer Geschwindigkeit in X-Richtung von der Palettenaufnahme geschoben wird. Sobald die Palette mit den bearbeiteten Werkstücken von der Palettenaufnahme in eine Warteposition A geschoben ist, wird der Schlitten in Y-Richtung verschoben, um die Schwinge mit ihrer Rolle in Eingriff zu bringen mit einer Palette mit unbearbeiteten Werkstücken, die sich in einer Warteposition B befindet. Darauf wird die Palettenaufnahme wieder in X-Richtung zurückgeschoben, wobei die Schwinge zurückgeschwenkt wird und die Palette mit den unbearbeiteten Werkstücken auf die Palettenaufnahme schiebt. Durch Absenken der Palettenaufnahme wird die Palette gespannt und indexiert.

Das Abheben der Palettenaufnahme für den Palettenwechsel und zum Einkuppeln des Zahnrads der Schwinge macht die Konstruktion aufwendig. Der Palettenwechsler schiebt die Palette von der Palettenaufnahme in eine unmittelbar angrenzende erste Warteposition und übernimmt die Paletten aus einer ebenfalls unmittelbar angrenzenden zweiten Warteposition, wobei die beiden Wartepositionen in einer gemeinsamen Ebene nebeneinander angeordnet sind. Die räumliche Trennung der Wartepositionen von dem Arbeitsraum der Werkzeugmaschinen ist ungenügend. Außerdem beeinträchtigt die Notwendigkeit zweier in gleicher Ebene nebeneinander angebrachter Wartepositionen die Flexibilität im Aufbau der werkzeugmaschine und in den Einsatzmöglichkeiten eines Palettenspeichers. Schließlich benötigt der Palettenwechsel Bewegungen der Palettenaufnahme in zwei Achsen, nämlich der X- und der Y-Richtung, so daß der Palettenwechsler sich nicht für Werkzeugmaschinen, wie z.B. Bearbeitungszentren, eignet, bei welchen die Palettenaufnahme nur in einer räumlichen Achse verschiebbar ist, während die Bewegung in den beiden anderen räumlichen Achsen von dem Werkzeug durchgeführt wird.

Der Erfindung liegt die Aufgabe zugrunde, einen Palettenwechsler zu schaffen, der einen Wechsel der Paletten mit geringen Nebenzeiten bei einer nur in einer räumlichen Richtung verschiebbaren Palettenaufnahme ermöglicht und der in der Anbindung an die Palettenzuführung flexibel ist.

Diese Aufgabe wird erfindungsgemäß gelöst durch einen Palettenwechsler mit den Merkmalen des Anspruchs 1.

Vorteilhafte Ausführungsformen der Erfindung sind in den Unteransprüchen angegeben.

Bei dem erfindungsgemäßen Palettenwechsler ist die Palettenaufnahme in einem nur in einer Raumachse verschiebbaren Schlitten gelagert. Die Bewegung des Schlittens wird zum Schwenkantrieb der Schwinge verwendet, wobei die Schwinge die Palette senkrecht zu der Bewegungsachse des Schlittens von der Palettenaufnahme schiebt. Ein Brückentisch wird synchron mit der Verschiebung des Schlittens mitgenommen, so daß die Palette während der Bewegung des Schlittens von der Palettenaufnahme auf den Brückentisch geschoben werden kann. Sobald die Palette vollständig auf den Brückentisch geschoben ist, kommt dieser in seine Übergabestellung, in welcher seine Palettenführungen mit den Palettenführungen einer Übergabestation fluchten. In dieser Übergabestellung wird der Brückentisch festgehalten, so daß die Palette von dem Brückentisch in die Übergabestation geschoben werden kann, wozu der Schlitten weiterverschoben wird und die Schwinge weiter verschwenkt.

Die Übernahme der Palette auf den Brückentisch und die Übergabe der Palette von dem Brückentisch auf die Übergabestation ermöglichen einen größeren Abstand der Übergabestation von dem Arbeitsraum der Werkzeugmaschine, in welchem sich die Palettenaufnahme des Schlittens befindet. Insbesondere ergibt sich eine große konstruktive Freiheit in der Gestaltung der Übergabestation. Insbesondere kann die Übergabestation eine Station eines Palettenspeichers oder eines Verkettungssystems sein, so daß sich eine hohe Flexibilität im Einsatz der Werkzeugmaschine und ihrer Palettenzuführung ergibt.

Der gesamte Antrieb und die gesamte Steuerung des Palettenwechslers erfolgen mechanisch über den Antrieb der Schlittenbewegung, so daß der Palettenwechsler keinen zusätzlichen Antriebsmotor und keine zusätzliche Steuerung benötigt. Dadurch wird der konstruktive Aufwand niedrig gehalten.

Im folgenden wird die Erfindung anhand eines in der Zeichnung dargestellten Ausführungsbeispiels näher erläutert. Es zeigen:

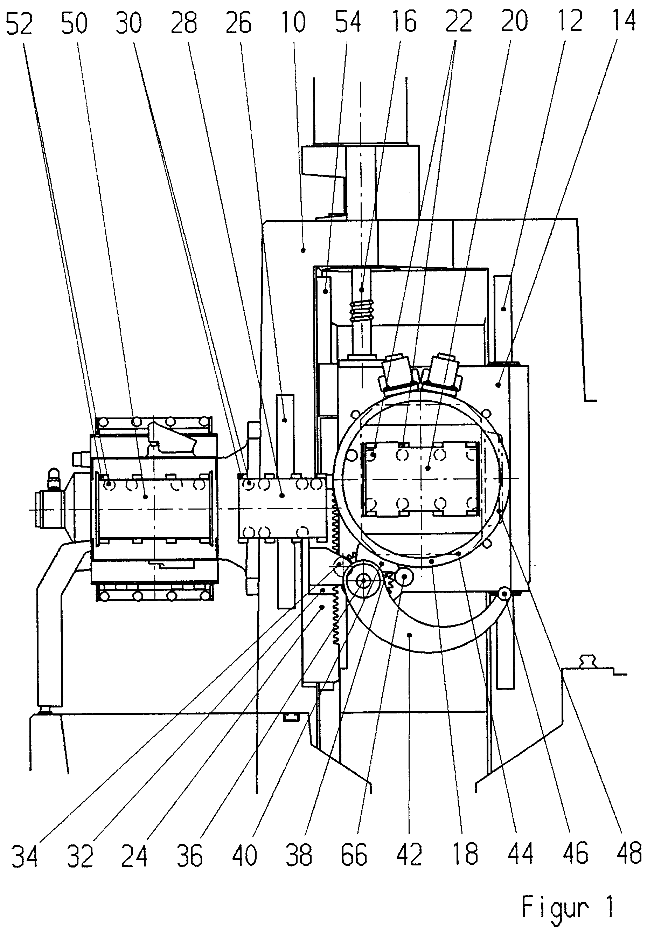

- Figur 1: eine Frontansicht des Palettenwechslers,
- Figur 2: eine teilweise geschnittene Ansicht gemäß dem Pfeil X in Figur 1,
- Figur 3: eine Detaildarstellung in Frontansicht in der Grundstellung des Palettenwechslers,
- Figur 4: eine Figur 3 entsprechende Darstellung in der Anfangsphase des Wechselvorganges und
- Figuren 5 bis 11: den Bewegungsablauf des Palettenwechsels in einer vereinfachten Frontansicht.

In dem in den Zeichnungen dargestellten Ausführungsbeipiel ist der Palettenwechsler in Verbindung mit einem Bearbeitungszentrum gezeigt, bei welchem der Werkstücktisch mit horizontaler Achse vertikal an einem Ständer verfahrbar ist (X-Achse) und die Werkzeugspindel horizontal in einem Spindelkasten gelagert ist, der in den beiden horizontalen Achsen (Y-Achse und Z-Achse) verfahrbar ist.

An dem Ständer 10 ist in vertikalen Führungsschienen 12 ein Schlitten 14 verfahrbar. Der Schlitten 14 wird mittels eines Elektromotors über eine Spindel 16 angetrieben.

In dem Schlitten 14 ist ein Rundtisch oder Rundschalttisch mit horizontaler Achse drehbar gelagert. Der Rundtisch bzw. Rundschalttisch weist einen Teller 18 auf, an dessen Stirnfläche eine Palettenaufnahme 20 angebracht ist. Die Palettenaufnahme 20 weist Palettenführungen 22 und eine Palettenindexierung auf. Die Palettenführungen 22 sind mit kugelgelagerten Rollen ausgestattet und dienen in bekannter Weise zur Aufnahme von genormten Wechselpaletten.

An der vertikalen Stirnseite des Ständers 10 ist eine Zahnstange 24 befestigt, die vertikal parallel zu den Führungsschienen 12 verläuft, seitlich an den Schlitten 14 angrenzt und sich von der unteren Endstellung des Schlittens 14 nach oben erstreckt. Die Zahnung der Zahnstange 24 ist dem Schlitten 14 zugewandt.

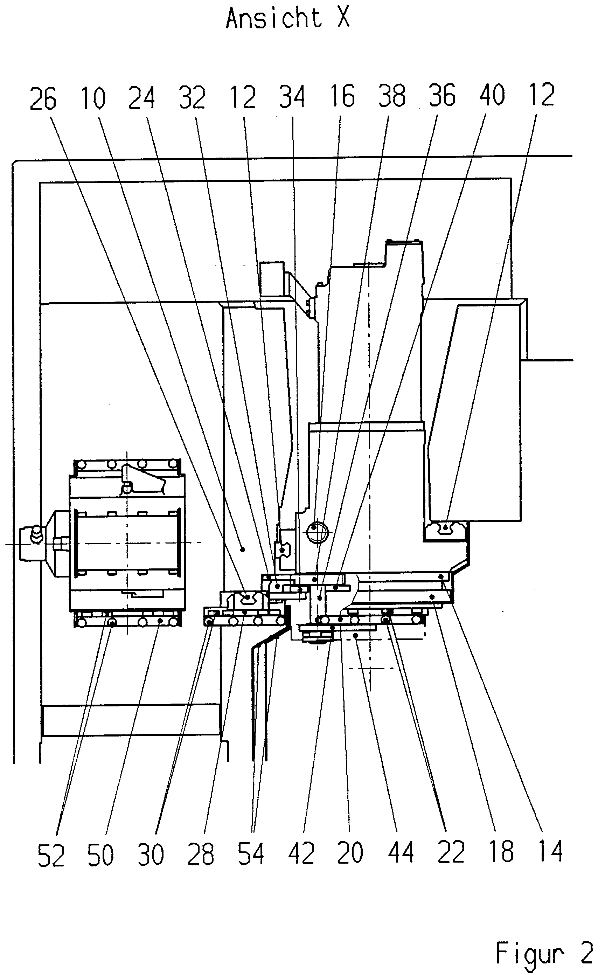

Weiter ist an der vertikalen Stirnseite des Ständers 10 eine vertikale Brückenführungsschiene 26 befestigt, die sich an der von dem Schlitten 14 abgewandten Seite der Zahnstange 24 befindet. Auf der Brückenführungsschiene 26 ist vertikal verschiebbar ein Brückentisch 28 gelagert. Der Brückentisch 28 trägt an seiner vertikalen Stirnfläche horizontal angeordnete Palettenführungen 30, die den Palettenführungen 22 der Palettenaufnahme 20 entsprechend ausgebildet sind. An dem Brückentisch 28 ist eine zweite vertikale Zahnstange 32 befestigt, die stirnseitig vor der ständerfesten Zahnstange 24 angeordnet ist. Die Zahnungen der Zahnstangen 24 und 32 stimmen in Zahnform und Zahnteilung überein und sind so angeordnet, daß sie bei entsprechender Vertikalposition der Zahnstange 32 miteinander zur Deckung kommen. Weiter ist an dem Brückentisch 28 eine Mitnehmerrolle 34 um eine horizontale Achse drehbar gelagert. Die Mitnehmerrolle 34 ist an dem Brückentisch 28 stirnseitig vor der Zahnstange 32 angeordnet, wie aus Figur 2 erkennbar ist.

An der der Zahnstange 24 zugewandten unteren Ecke des Schlittens 14 ist in dem Schlitten 14 eine Welle 36 mit zur Ebene des Schlittens 14 senkrechter horizontaler Achse drehbar gelagert. Auf dem dem Ständer 10 zugewandten Ende der Welle 36 sitzt ein Zahnrad 38, dessen Verzahnung sich über etwa 2/3 des Umfangs erstreckt. Die Zahnung des Zahnrades 38 entspricht der Zahnung der Zahnstangen 24 und 32. Die axiale Breite und die axiale Anordnung des Zahnrades 38 sind so gewählt, daß dessen Verzahnung mit den Zahnstangen 24 und 32 in Eingriff kommen kann. Axial vor dem Zahnrad 38 ist ebenfalls drehfest auf der Welle 36 eine Mitnehmerkurve 40 angebracht, deren Außenumfang mit der Mitnehmerrolle 34 des Brückentisches 28 zur Anlage kommen kann. An der Stirnseite des Schlittens 14 sitzt drehfest auf der Welle 36 eine sichelförmig gebogene Schwinge 42. Die Schwenkebene der Schwinge 42 liegt unmittelbar stirnseitig vor der vertikalen Stirnfläche des Schlittens 14. Die Schwinge 42 befindet sich außerhalb einer auf der Palettenaufnahme 20 angeordneten Palette 44. Die Schwinge 42 weist an ihrem freien Ende eine Rolle 46 auf, die um eine horizontale Achse drehbar ist und auf der von dem Schlitten 14 abgewandten Seite der Schwinge 42 sitzt. Die Paletten 44 weisen an ihrer einen zu der Richtung der Palettenführungen 22 senkrechten Stirnkante unterseitig eine Nut 48 auf, in welche die Rolle 46 der Schwinge 42 eingreifen kann.

Seitlich nebem dem Ständer 10 ist eine Übergabestation 50 angeordnet, die im dargestellten Ausführungsbeispiel eine Station eines Palettenspeichers ist. Die Übergabestation 50 weist ebenfalls horizontal angeordnete Palettenführungen 52 für die genormten Paletten 44 auf.

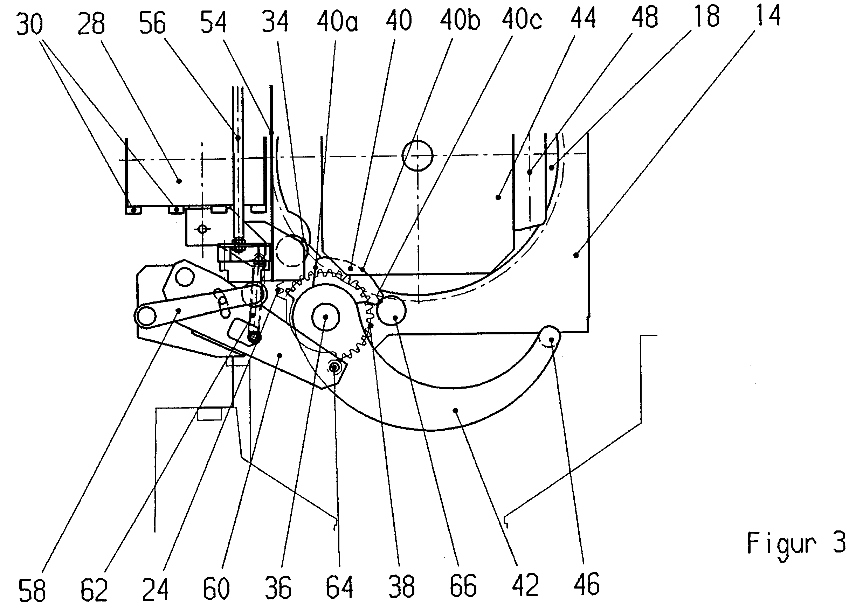

Weitere Einzelheiten des Palettenwechslers gehen aus der nachfolgenden Funktionsbeschreibung hervor, bei welcher auf die Figuren 3 bis 11 Bezug genommen wird.

In Figur 3 ist in einer vergrößerten Detaildarstellung die Grundstellung des Palettenwechslers gezeigt. Diese Grundstellung nimmt der Palettenwechsler während des Bearbeitungsvorganges ein.

In der Grundstellung schließt eine vertikal absenkbare Tür 54 den Arbeitsraum des Bearbeitungszentrums ab. Die Tür 54 senkt sich zwischen dem Schlitten 14 mit der Palettenaufnahme 20 und dem Brückentisch 28 ab. Das Heben und Senken der Tür 54 wird mittels eines Fluidzylinders bewirkt, dessen Kolbenstange 56 in Figur 3 gezeigt ist. Die Tür 54 drückt mit einem unteren Anschlag einen ersten Hebel 58 nach unten, der wiederum einen zweiten Hebel 60 gegen die Kraft einer am Ständer angebrachten vorgespannten Feder 62 nach unten mitnimmt. An dem freien Ende des zweiten Hebels 60 ist eine Rolle 64 gelagert, die mit dem Zahnrad 38 in Eingriff kommen kann. Die Schwinge 42 befindet sich unter ihrem Eigengewicht in einer Endstellung, in welcher ihre Rolle 46 sich außerhalb der Palette 44 befindet. In dieser Endstellung wird die Schwinge 42 dadurch gehalten, daß eine radiale Kante 40c der Mitnehmerkurve 40 an einem an dem Schlitten 14 angebrachten Anschlag 66 anliegt. In dieser Endstellung der Schwinge 42 ist die sich nur über einen Teil des Umfangs erstreckende Verzahnung des Zahnrades 38 aus dem Eingriff von der ständerfesten Zahnstange 24 gedreht. Der Schlitten 14 kann daher für den Bearbeitungsvorgang ungehindert auf- und abbewegt werden, ohne daß das Zahnrad 38 in die Zahnstangen 24 und 32 eingreift. Die Tür 54 hält die Hebel 58 und 60 in einer solchen Stellung, daß die Rolle 64 des Hebels 60 noch außer Eingriff von dem Zahnrad 38 ist, wenn sich der Schlitten in seiner in Figur 3 gezeigten untersten Stellung befindet.

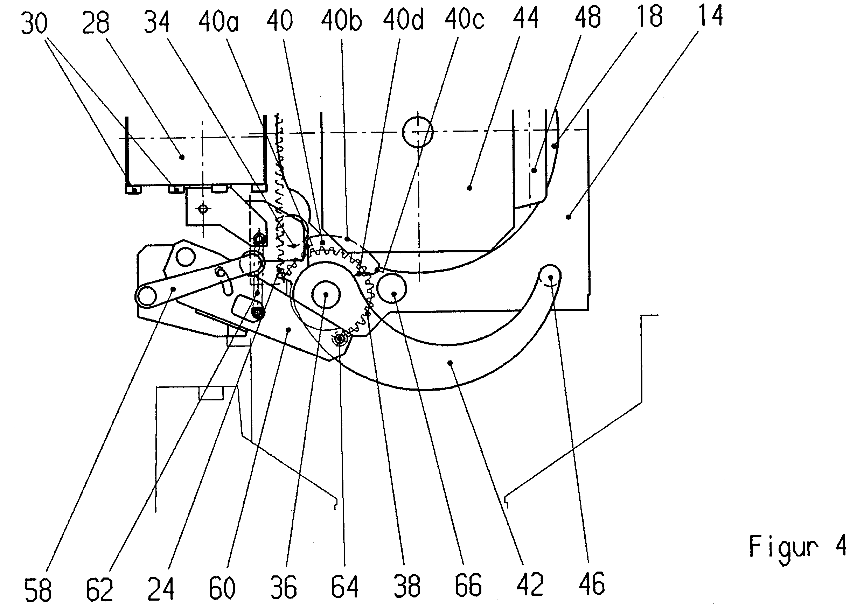

Soll die Palette, die sich auf der Palettenaufnahme 20 des Schlittens 14 befindet, gewechselt werden, so wird zunächst der Schlitten 14 in seine in Figur 3 gezeigte unterste Stellung gefahren. Die gesamte Vorrichtung nimmt dabei die in Figur 3 gezeigte Stellung ein. Es wird nun die den Arbeitsraum verschließende Tür 54 nach oben geöffnet. Dabei hebt der Anschlag der Tür 54 von dem ersten Hebel 58 ab und gibt diesen frei. Die vorgespannte Feder 62 kann nun den zweiten Hebel 60 nach oben (in der Zeichnung im Uhrzeigersinn) ziehen. Dabei wird die Rolle 64 des zweiten Hebels 60 unter der Kraft der Feder 62 gegen die Zahnflanke des ersten Zahnes des Zahnrades 38 gedrückt, wie dies Figur 4 zeigt. Die Schwinge 42 wird dadurch im Gegenuhrzeigersinn aus ihrer Grundstellung geschwenkt, die Mitnehmerkurve 40 kommt von dem Anschlag 66 frei und das Zahnrad 38 kommt mit seinem im Gegenuhrzeigersinn letzten Zahn in Eingriff mit der ständerfesten Zahnstange 24. Diese Situation ist in Figur 4 dargestellt.

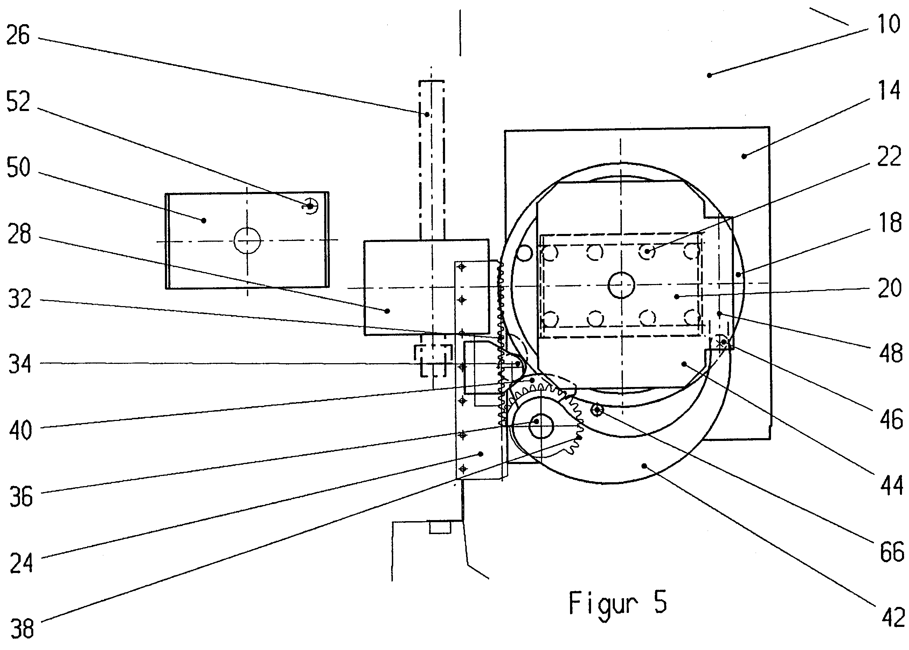

Nun wird der Schlitten 14 nach oben gefahren. Dabei wird die Schwinge 42 im Gegenuhrzeigersinn verschwenkt, da das Zahnrad 38 mit der ständerfesten Zahnstange 24 kämmt. Bei diesem Verschwenken der Schwinge 42 gelangt die vorlaufende radiale Kante 40a der Mitnehmerkurve 40 an die Mitnehmerrolle 34 und die Mitnehmerkurve 40 dreht sich unter die Mitnehmerrolle 34, so daß sich die Mitnehmerrolle 34 auf einem Umfangsabschnitt 40b der Mitnehmerkurve 40 abstützt, der mit konstantem Radius konzentrisch zur Welle 36 verläuft. Die Schwinge 42 wird weiter verschwenkt, wobei ihre Rolle 46 von unten in die Nut 48 der Palette 44 eintritt. Diese Situation ist in Figur 5 dargestellt.

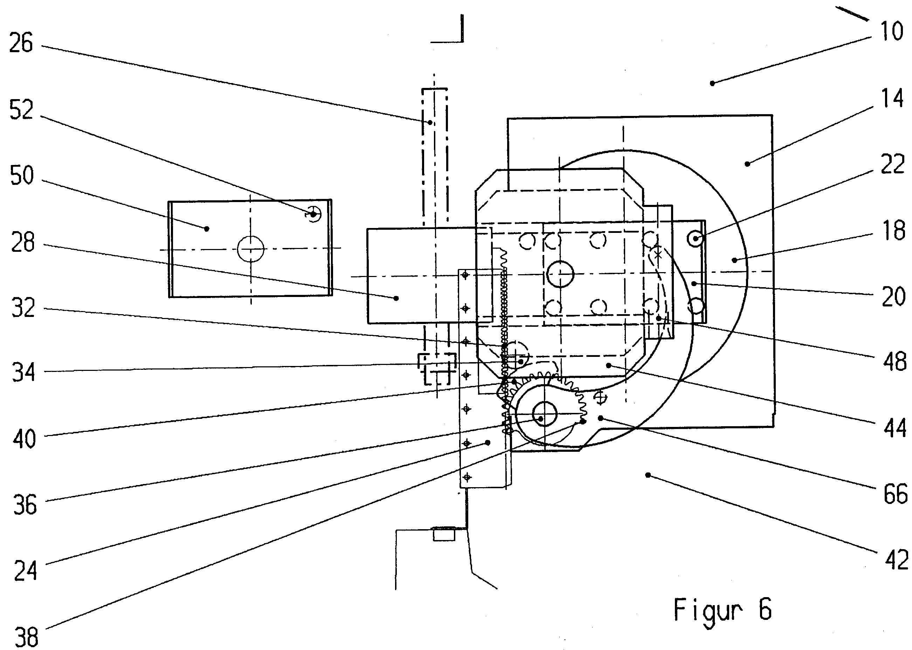

Bei der weiteren Bewegung des Schlittens 14 nach oben wird der Brückentisch 28 synchron mit dem Schlitten 14 mitgenommen und auf seiner Brückenführungsschiene 26 nach oben verschoben, da sich seine Mitnehmerrolle 34 auf dem konzentrischen Umfangsabschnitt 40b der Mitnehmerkurve 40 abstützt. Die Schwinge 42 wird weiter im Gegenuhrzeigersinn verschwenkt und schiebt dabei die Palette 44 (in der Zeichnung nach links) von den Palettenführungen 22 der Palettenaufnahme 20 auf die Palettenführungen 30 des Brückentisches 28. Diese Verschiebung ist während der Bewegung des Schlittens 14 nach oben möglich, da sich der Brückentisch 28 zusammen mit dem Schlitten 14 bewegt und dadurch die Palettenführungen 22 der Palettenaufnahme 20 und die Palettenführungen 30 des Brückentisches 28 stets fluchtend bleiben. Die sichelförmige Ausbildung der Schwinge 42 gewährleistet, daß die Schwinge 42 bei dieser Schwenkbewegung um die rechte untere Ecke der Palette 44 herumgeführt wird und die Palette 44 die Bewegung der Schwinge 42 nicht behindert. Diese Situation ist in Figur 6 dargestellt.

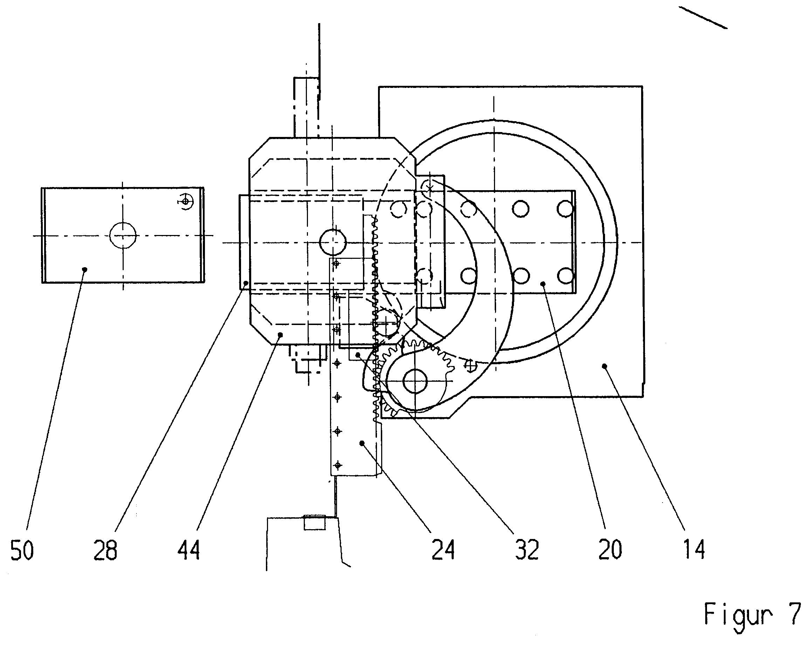

Sobald der Schlitten 14 so weit nach oben geschoben ist, daß die Palettenführungen 22 der Palettenaufnahme 20 und die Palettenführungen 30 des Brückentisches 28 auf die gleiche Höhe gelangen wie die Palettenführungen 52 der Übergabestation 50, hat sich die Mitnehmerkurve 40 zusammen mit der Schwinge 42 so weit gedreht, daß die Mitnehmerrolle 34 an das Ende des konzentrischen Umfangsabschnitts 40b der Mitnehmerkurve 40 gelangt. Die Palette 44 ist dabei nahezu vollständig von der Palettenaufnahme 20 auf den Brückentisch 28 geschoben. Diese Situation ist in Figur 7 dargestellt.

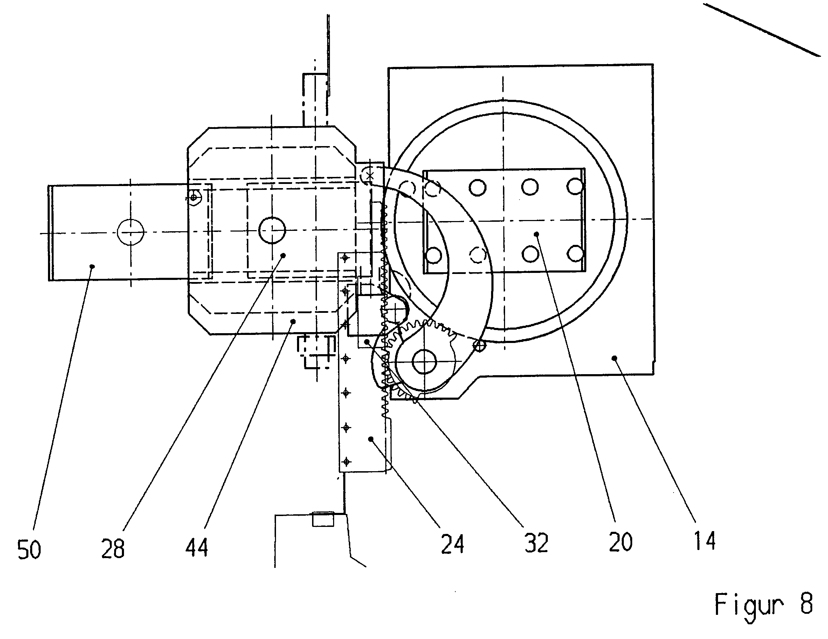

Wenn der Schlitten 14 und der Brückentisch 28 die Übergabestellung erreicht haben, in welcher die Palettenführungen 22 der Palettenaufnahme 20, die Palettenführungen 30 des Brückentisches 28 und die Palettenführungen 52 der Übergabestation 50 exakt fluchten, ist die Palette 44 vollständig auf den Brückentisch 28 geschoben und von den Palettenführungen 22 der Palettenaufnahme 20 freigekommen. Die Mitnehmerkurve 40 hat sich so weit gedreht, daß ihr konzentrischer Umfangsabschnitt 40b unter der Mitnehmerrolle 34 weggedreht ist und die Mitnehmerrolle 34 zur Anlage an einem im wesentlichen radialen Abschnitt 40c der Mitnehmerkurve 40 kommt. Der Verlauf des radialen Abschnittes 40c der Mitnehmerkurve 40 ist so gewählt, daß bei der weiteren Bewegung des Schlittens 14 nach oben die Mitnehmerrolle 34 nicht weiter nach oben gedrückt wird und der Brückentisch 28 seine vertikale Stellung beibehält, in welcher seine Palettenführungen 30 mit den Palettenführungen 52 der Übergabestation 50 fluchten. Da der Brückentisch 28 nun nicht weiter nach oben verschoben wird, bleibt auch die an dem Brückentisch 28 angebrachte Zahnstange 32 stehen und das Zahnrad 38 kommt nun auch mit dieser Zahnstange 32 in Eingriff. Diese Situation ist in Figur 8 dargestellt.

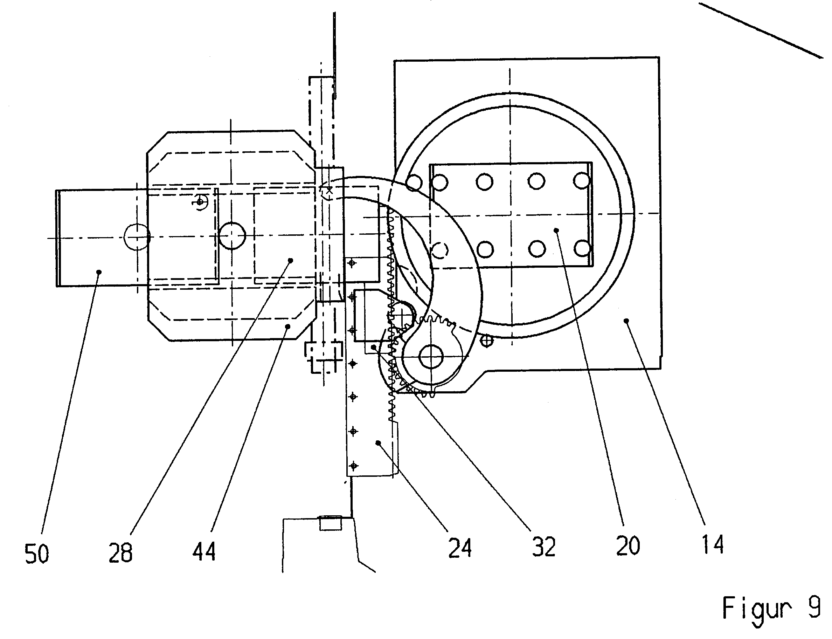

Bei der weiteren Verschiebung des Schlittens 14 nach oben wird die Schwinge 42 weiter im Uhrzeigersinn verschwenkt und schiebt nun die Palette 44 von dem Brückentisch 28 auf die Palettenführungen 52 der Übergabestation 50. Bei dieser Drehung gelangt die Mitnehmerrolle 34 von dem radialen Abschnitt 40c der Mitnehmerkurve 40 in einen hinterschnittenen Abschnitt 40d der Mitnehmerkurve 40. Diese Situation ist in Figur 9 dargestellt.

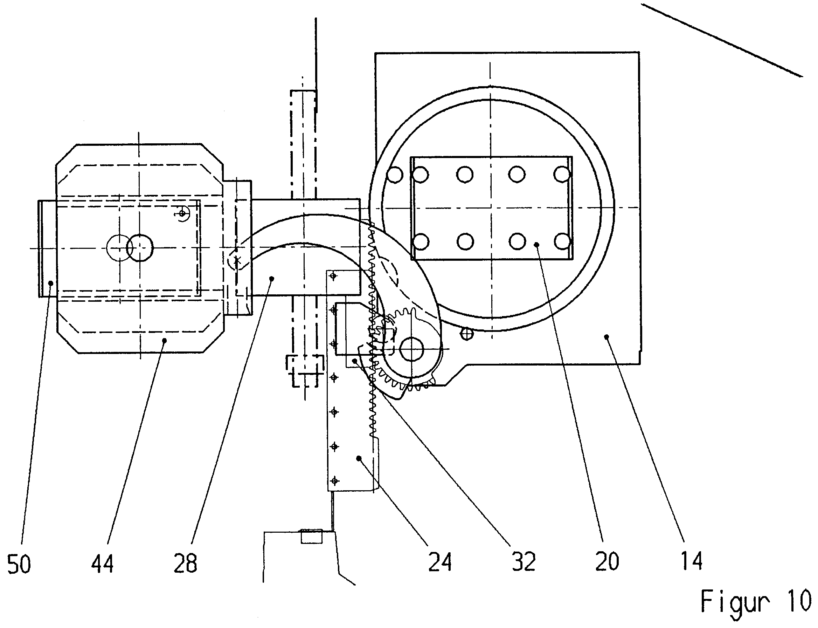

Der Schlitten 14 wird weiter nach oben gefahren. Die Schwinge 42 schiebt die Palette 44 von dem Brückentisch 28 vollständig auf die Palettenführungen 52 der Übergabestation 50. Die Mitnehmerrolle 34 befindet sich im Bereich des hinterschnittenen Abschnitts 40d der Mitnehmerkurve 40 und ist damit von der Mitnehmerkurve 40 frei und wird durch diese nicht mehr abgestützt. Die Bewegung des Schlittens 14 nach oben nimmt damit den Brückentisch 28 nicht mehr mit. Das Zahnrad 38 kämmt sowohl mit der ständerfesten Zahnstange 24 als auch mit der an dem Brückentisch 28 befestigten Zahnstange 32. Die Zahnstangen 24 und 32 werden dadurch mittels des Zahnrades 38 mit deckungsgleicher Verzahnung gehalten und der Brückentisch 28 wird in bezug auf den Ständer 10 in der Lage fixiert, in welcher seine Palettenführungen 30 mit den Palettenführungen 52 der Übergabestation 50 fluchten. Diese Situation ist in Figur 10 dargestellt.

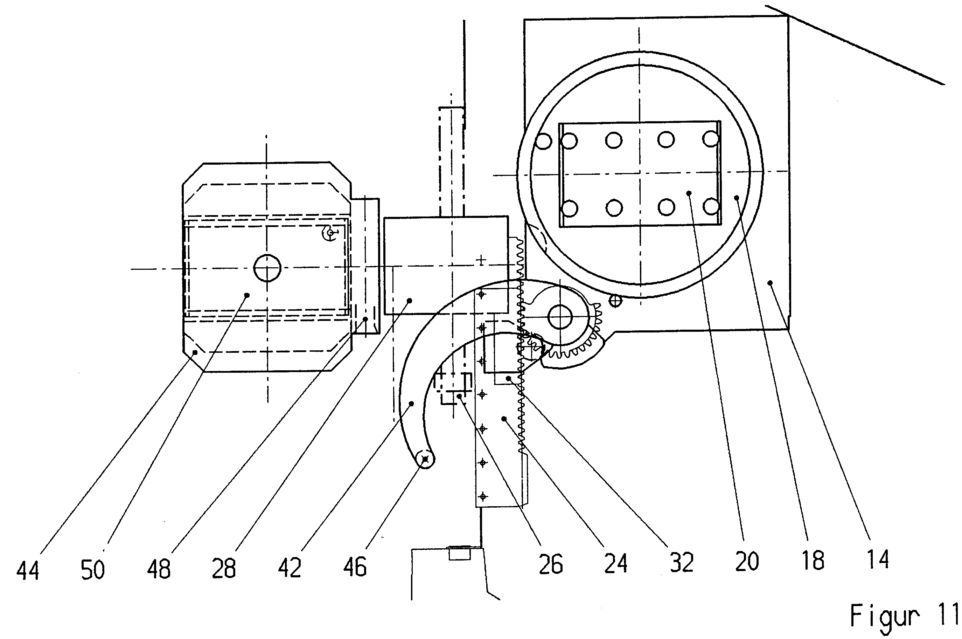

Bei der weiteren Bewegung des Schlittens 14 nach oben wird mittels des mit der Zahnstange 24 kämmenden Zahnrades 38 die Schwinge 42 weiter im Gegenuhrzeigersinn verschwenkt. Dabei tritt die Rolle 46 der Schwinge 42 nach unten aus der Nut 48 der Palette 44 aus, sobald die Palette 44 vollständig auf die Übergabestation 50 geschoben ist. Die Schwinge 42 wird noch weitergeschwenkt, bis sie ihre Endstellung erreicht, in welcher sie aus dem Bewegungsbereich des Palettenspeichers gelangt ist. Diese Situation ist in Figur 11 dargestellt.

Nun kann der Palettenspeicher weitergeschaltet werden, so daß die übernommene Palette 44 mit den bearbeiteten Werkstücken aus der Übergabestation 50 bewegt wird und eine neue Palette mit unbearbeiteten Werkstücken in die Übergabestation 50 gelangt. Daraufhin wird der Schlitten 14 wieder nach unten bewegt, wobei über das mit der Zahnstange 24 kämmende Zahnrad 38 die Schwinge 42 entgegengesetzt im Uhrzeigersinn verschwenkt wird. Die Rolle 46 der Schwinge 42 tritt von unten in die Nut 48 der Palette 44 ein, die sich nun in der Übergabestation 50 befindet. Bei der weiteren Abwärtsbewegung des Schlittens 14 läuft der geschilderte Vorgang in umgekehrter Richtung ab und die Palette 44 wird über den Brückentisch 28 wieder auf die Palettenaufnahme 20 des Schlittens 14 geschoben, wobei sich der Schlitten 14 und der Brückentisch 28 wieder gemeinsam nach unten bewegen, sobald die Palette 44 vollständig von dem Brückentisch 28 übernommen und von der Palettenführung 52 der Übergabestation 50 freigekommen ist. Wenn sich die Palette 44 vollständig auf der Palettenaufnahme 20 des Schlittens 14 befindet, wird die Palette 44 an der Palettenaufnahme 20 gespannt und indexiert. Der Schlitten 14 wird vollständig nach unten gefahren, so daß das Zahnrad 38 außer Eingriff von der Zahnstange 24 kommt. Dann wird die Tür 54 nach unten bewegt und geschlossen, wobei die Hebel 58 und 60 nach unten gedrückt werden und die Rolle 64 von der Verzahnung des Zahnrades 38 abgehoben wird. Die Schwinge 42 fällt unter ihrem Eigengewicht in ihre Grundstellung, in welcher die Mitnehmerkurve 40 an dem Anschlag 66 anliegt. Der Bearbeitungsvorgang kann nun beginnen, wobei der Schlitten 14 unbehindert durch den Palettenwechsler vertikal auf- und abbewegt werden kann.

## Patentansprüche

1. Palettenwechsler für Werkzeugmaschinen, mit einer an einem verschiebbaren Schlitten (14) gelagerten Palettenaufnahme (20), die Palettenführungen zur Aufnahme einer Palette während des Bearbeitungsvorganges aufweist, mit einer Übergabestation (50), die Palettenführungen aufweist, mit einer mittels einer Welle drehbar an dem Schlitten gelagerten Schwinge (42), auf deren Welle ein Zahnrad (38) sitzt, mit einer maschinenfesten Zahnstange (24), mit welcher das Zahnrad kämmt, um die Schwinge bei einer Verschiebung des Schlittens zu verschwenken, wobei die Schwinge in eine Nut der Palette eingreift und bei ihrer Verschwenkung die Palette zwischen den Palettenführungen der Palettenaufnahme und den Palettenführungen der Übergabestation verschiebt, dadurch gekennzeichnet,
daß die Palettenführungen (22) der Palettenaufnahme (20) während des Palettenwechsels rechtwinklig zur Verschiebungsrichtung des Schlittens (14) angeordnet sind, daß ein Brückentisch (28) zwischen der Palettenaufnahme (20) und der Übergabestation (50) angeordnet ist, daß der Brückentisch (50) parallel zur Verschiebungsrichtung des Schlittens (14) verschiebbar ist und rechtwinklig zu dieser Verschiebungsrichtung angeordnete Palettenführungen (30) aufweist, daß der Brückentisch (50) während des Palettenwechsels zusammen mit der Palettenaufnahme (20) verschoben wird, wobei die Palettenführungen (22 bzw. 30) der Palettenaufnahme (20) und des Brückentisches (28) fluchten, und daß in der Übergabestellung die Palettenführungen (30) des Brückentisches (28) mit den Palettenführungen (52) der Übergabestation (50) fluchten.

2. Palettenwechsler nach Anspruch 1, dadurch gekennzeichnet, daß der Brückentisch (28) durch eine Mitnehmereinrichtung (34, 40) von dem Schlitten (14) bei dessen Verschiebung mitgenommen wird.

3. Palettenwechsler nach Anspruch 2, dadurch gekennzeichnet, daß die Mitnehmereinrichtung (34, 40) außer Eingriff kommt, sobald der Brückentisch (28) die Übergabestellung erreicht.

4. Palettenwechsler nach Anspruch 3, dadurch gekennzeichnet, daß die Mitnehmereinrichtung eine an dem Brückentisch (28) angeordnete Mitnehmerrolle (34) und eine auf der Welle (36) der Schwinge (42) sitzende Mitnehmerkurve (40) aufweist, wobei sich die Mitnehmerkurve (40) über einen begrenzten Umfangsabschnitt (40b) mit konstantem Radius konzentrisch zur Welle (36) erstreckt und sich die Mitnehmerrolle (34) an diesem Umfangsabschnitt (40b) der Mitnehmerkurve (40) während der Mitnahme des Brückentisches (28) abstützt.

5. Palettenwechsler nach Anspruch 3 oder 4, dadurch gekennzeichnet, daß an dem Brückentisch (28) eine Zahnstange (32) angebracht ist, die parallel zu der maschinenfesten Zahnstange (24) angeordnet ist, und daß das Zahnrad (38) in diese Zahnstange (32) eingreift, um den Brückentisch in der Übergabestellung festzuhalten, sobald die Mitnehmereinrichtung (34, 40) außer Eingriff ist.

6. Palettenwechsler nach einem der vorhergehenden Ansprüche, dadurch gekennzeichnet, daß das Zahnrad (38) nur über einen Teil seines Umfanges verzahnt ist und in einer Grundstellung der Schwinge (42) mit seinem unverzahnten Umfangsbereich der Zahnstange (24) zugewandt ist, so daß das Zahnrad (38) vollständig außer Eingriff von der Zahnstange (32) ist.

7. Palettenwechsler nach einem der vorhergehenden Ansprüche, dadurch gekennzeichnet, daß die Schwinge (42) mit einer Rolle (46) in die Nut (48) der Palette (44) eingreift und daß die Rolle (46) in Richtung der Längserstreckung der Nut (48) in diese Nut (48) eintritt und aus dieser Nut (48) austritt.

8. Palettenwechsler nach einem der vorhergehenden Ansprüche, dadurch gekennzeichnet, daß eine Einrückeinrichtung (58, 60, 62, 64) vorgesehen ist, die die Schwinge (42) zu Beginn des Palettenwechsels aus ihrer Grundstellung so verschwenkt, daß die Umfangsverzahnung des Zahnrades (38) mit der Zahnstange (24) in Eingriff kommt.

9. Palettenwechsler nach Anspruch 8, dadurch gekennzeichnet, daß eine den Arbeitsraum der Werkzeugmaschine abschließende Tür (54) die Einrückeinrichtung (58, 60, 62, 64) außer Funktion hält, wenn sich die Tür (54) in ihrem geschlossenen Zustand befindet, und daß das Öffnen der Tür (54) die Einrückeinrichtung (58, 60, 62, 64) in Funktion setzt.

## Claims

1. A pallet changing apparatus for machine tools, having a pallet support (20) mounted on a displaceable slide (14), which comprises pallet guides for supporting a pallet during the machining operation, having a transfer station (50) comprising pallet guides, having a rocker (42) mounted rotatably on the slide by means of a shaft, on the shaft of which a toothed wheel (38) is seated, having a toothed rack (24) fixed to the machine, with which the toothed wheel meshes, in order to swivel the rocker during a displacement of the slide, whereby the rocker engages in a groove in the pallet and during its swivelling motion the pallet moves between the pallet guides of the pallet support and the pallet guides of the transfer station,
**characterised in that** the pallet guides (22) of the pallet support (20) are disposed at right angles to the direction of displacement of the slide (14) during the pallet change,
**in that** a bridge table (28) is disposed between the pallet support (20) and the transfer station (50),
**in that** the bridge table (50) is displaceable parallel to the direction of displacement of the slide (14) and comprises pallet guides (30) disposed at right angles to this direction of displacement,
**in that** the bridge table (50) is displaced together with the pallet support (20) during the pallet change, whereby the pallet guides (22 and respectively 30) of the pallet support (20) and of the bridge table (28) align,
**and in that** in the transfer position the pallet guides (30) of the bridge table (28) align with the pallet guides (52) of the transfer station (50).

2. A pallet changing apparatus according to Claim 1,
**characterised in that** the bridge table (28) is entrained by an entraining device (34, 40) of the slide (14) during its displacement.

3. A pallet changing apparatus according to Claim 2,
**characterised in that** the entraining device (34, 40) becomes disengaged as soon as the bridge table (28) reaches the transfer position.

4. A pallet changing apparatus according to Claim 3,
**characterised in that** the entraining device comprises a driving roller (34) disposed on the bridge table (28) and a driving cam plate (40) seated on the shaft (36) of the rocker (42), whereby the driving cam plate (40) extends over a limited circumferential portion (40b) with a constant radius concentrically to the shaft (36) and the driving roller (34) is supported on this circumferential portion (40b) of the driving cam plate (40) during the entrainment of the bridge table (28).

5. A pallet changing apparatus according to Claim 3 or 4,
**characterised in that** a toothed rack (32), which is disposed parallel to the toothed rack (24) fixed to the machine, is mounted on the bridge table (28),
**and in that** the toothed wheel (38) engages in this toothed rack (32) in order to secure the bridge table in the transfer position as soon as the entraining device (34, 40) is disengaged.

6. A pallet changing apparatus according to one of the preceding Claims,
**characterised in that** the toothed wheel (38) has teeth only over a part of its circumference and in an initial position of the rocker (42) is faced towards the toothed rack (24) with its circumferential region not having teeth so that the toothed wheel (38) is completely disengaged from the toothed rack (32).

7. A pallet changing apparatus according to one of the preceding Claims,
**characterised in that** the rocker (42) engages by a roller (46) in the groove (48) of the pallet (44),
**and in that** the roller (46) enters this groove (48) and leaves this groove (48) in the direction of the longitudinal extension of the groove (48).

8. A pallet changing apparatus according to one of the preceding Claims,
**characterised in that** an engagement device (58, 60, 62, 64) is provided, which swivels the rocker (42) at the start of the pallet change from its initial position so that the circumferential toothing of the toothed wheel (38) comes into engagement with the toothed rack (24).

9. A pallet changing apparatus according to Claim 8,
**characterised in that** a door (54) closing the working area of the machine tools keeps the engagement device (58, 60, 62, 64) non-operational when the door (54) is located in its closed state,
**and in that** the opening of the door (54) sets the engagement device (58, 60, 62, 64) in operation.

## Revendications

1. Echangeur de palettes pour machine-outil, comportant :
- un récepteur de palettes (20) monté sur un chariot coulissant (14) et équipé de guides pour recevoir une palette pendant le travail d'usinage,
- un poste de transfert (50) équipé de guides de palette,
- un bras oscillant (42), monté sur un arbre qui tourne sur le chariot et qui porte un pignon denté (38),
- une crémaillère (24) fixée à la machine-outil et engrenant avec le pignon denté (38) de manière à faire pivoter, lorsque le chariot coulisse, le bras oscillant qui vient s'engager dans une rainure de la palette et ainsi, en pivotant, fait coulisser la palette des guides du récepteur aux guides de la station de transfert,
échangeur caractérisé en ce que :
- pendant le changement des palettes, les guides de palette (22) du récepteur (20) sont dirigés perpendiculairement à la direction de déplacement du chariot coulissant (14),
- une table-pont (28) est intercalée entre le récepteur de palettes (20) et la station de transfert (50), table-pont qui peut se déplacer parallèlement à la direction de coulissement du chariot (14) et porte des guides de palette (30) perpendiculaires à cette direction,
- pendant le changement de palette, la table-pont (50) se déplace avec le récepteur de palettes (20), les guides respectifs (22) et (30) du récepteur (20) et de la table-pont (28) étant alignés
- en position de transfert, les guides de palette (30) de la table-pont (28) et les guides de palette (52) de la station de transfert (50) sont alignés.

2. Echangeur de palettes selon la revendication 1, caractérisé en ce que la table-pont (28) est entraînée par le chariot coulissant (14) lorsque celui-ci se déplace, par l'intermédiaire d'un dispositif d'entraînement (34, 40).

3. Echangeur de palettes selon la revendication 2, caractérisé en ce que le dispositif d'entraînement (34, 40) cesse d'agir dès que la table-pont (28) atteint la position de transfert.

4. Echangeur de palettes selon la revendication 3, caractérisé en ce que le dispositif d'entraînement comporte un galet d'entraînement (34) monté sur la table-pont (28) et une piste d'entraînement (40) située sur l'arbre (36) du bras oscillant (42), cette piste (40) ayant une partie (40b) de sa périphérie concentrique à l'arbre, avec un rayon constant, partie (40b) sur laquelle le galet d'entraînement (34) s'appuie pendant l'entraînement de la table-pont (28).

5. Echangeur de palettes selon la revendication 3 ou 4, caractérisé en ce que la table-pont (28) porte une crémaillère (32) parallèle à la crémaillère (24) fixée à la machine-outil, le pignon denté (38) venant en prise avec cette crémaillère (32) afin de maintenir la table-pont en position de transfert, dès que le dispositif d'entraînement (34, 40) cesse d'être en prise.

6. Echangeur de palettes selon l'une des revendications précédentes, caractérisé en ce que le pignon (38) n'est denté que sur une partie de sa périphérie, et en ce que ce pignon lorsque le bras oscillant (42) occupe une position centrale, a sa partie non dentée située en regard de la crémaillère (24), de sorte que le pignon (38) est totalement dégagé de la crémaillère (32).

7. Echangeur de palettes selon l'une des revendications précédentes, caractérisé en ce que le bras oscillant (42) est en prise par un galet (46) dans la rainure (48) de la palette (44), ce galet (46) entrant dans la rainure (48) selon la direction longitudinale de la rainure (48) et en sortant de même.

8. Echangeur de palettes selon l'une des revendications précédentes, caractérisé en ce qu'il comporte un dispositif d'embrayage (58, 60, 62, 64) qui, au début du changement de palette, fait pivoter le bras oscillant (42) à partir de sa position initiale de manière à amener la périphérie dentée du pignon (38) en prise avec la crémaillère (24).

9. Echangeur de palettes selon la revendication 8, caractérisé en ce qu'une porte (54), obturant le volume opératoire de la machine-outil, met le dispositif d'embrayage (58, 60, 62, 64) hors service lorsque la porte (54) est fermée, tandis que l'ouverture de la porte (54) met en service le dispositif d'embrayage (58, 60, 62, 64).
